# EUROPEAN PATENT APPLICATION

(11) **EP 4 611 421 A1**
(43) Date of publication of application: **03.09.2025**
(21) Application number: 22963950.5
(22) Date of filing: 03.11.2022
(51) Int. Cl.: H04W 24/08, H04W 36/00

(54) **NEIGHBOR CELL MEASUREMENT METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN); YU, Xinlei, Dongguan, Guangdong 523860 (CN)
(74) Representative: RGTH
(86) International application number: PCT/CN2022/129617
(87) International publication number: WO 2024/092639

(57) **Abstract**

The present application provides a neighbor cell measurement method, a terminal device, and a network device. The method comprises: a terminal device determines, according to one or more measurement criteria, whether to perform a neighbor cell measurement, wherein the one or more measurement criteria comprise measurement criteria based on the location of the terminal device. Regarding a neighbor cell measurement, measurement criteria based on the location of a terminal device are introduced in embodiments of the present application, and compared with a measurement based on RSRP, the measurement based on the location of a terminal device is more accurate, thereby avoiding misoperation of the terminal device.

## Description

### TECHNICAL FIELD

This application relates to the field of communications technologies, and more specifically, to a method for neighboring cell measurement, a terminal device, and a network device.

### BACKGROUND

In a related technology, a measurement criterion based on reference signal received power (reference signal received power, RSRP) is used to determine whether to execute neighboring cell measurement. In some communication scenarios, for example, a non-terrestrial network (non terrestrial network, NTN) scenario, there may be a relatively large measurement error in measurement of RSRP. Therefore, determining, based on an RSRP measurement criterion, whether to execute neighboring cell measurement may cause a misoperation of a terminal device.

### SUMMARY

This application provides a method for neighboring cell measurement, a terminal device, and a network device. The following describes the aspects involved in this application.

According to a first aspect, an embodiment of this application provides a method for neighboring cell measurement, where the method includes: determining, by a terminal device based on one or more measurement criteria, whether to execute neighboring cell measurement, where the one or more measurement criteria include a measurement criterion based on a location of the terminal device.

According to a second aspect, an embodiment of this application provides a method for neighboring cell measurement, where the method includes: configuring, by a network device, one or more measurement criteria, where the one or more measurement criteria are used to determine whether to execute neighboring cell measurement, and the one or more measurement criteria include a measurement criterion based on a location of a terminal device.

According to a third aspect, an embodiment of this application provides a terminal device, including: a determining unit, configured to determine, based on one or more measurement criteria, whether to execute neighboring cell measurement, where the one or more measurement criteria include a measurement criterion based on a location of the terminal device.

According to a fourth aspect, an embodiment of this application provides a network device, including: a configuring unit, configured to configure one or more measurement criteria, where the one or more measurement criteria are used to determine whether to execute neighboring cell measurement, and the one or more measurement criteria include a measurement criterion based on a location of a terminal device.

According to a fifth aspect, an embodiment of this application provides a terminal device, including a processor and a memory, where the memory is configured to store one or more computer programs, and the processor is configured to invoke the computer program in the memory, to cause the terminal device to execute some or all of the steps in the method according to the first aspect.

According to a sixth aspect, an embodiment of this application provides a network device, including a processor and a memory, where the memory is configured to store one or more computer programs, and the processor is configured to invoke the computer program in the memory, to cause the network device to execute some or all of the steps in the method according to the second aspect.

According to a seventh aspect, an embodiment of this application provides an apparatus, including a processor, configured to invoke a program from a memory to execute a method according to the first aspect or the second aspect.

According to an eighth aspect, an embodiment of this application provides a chip, where the chip includes a memory and a processor, and the processor may invoke a computer program from the memory and run the computer program, to execute a method according to the first aspect or the second aspect.

According to a ninth aspect, an embodiment of this application provides a computer-readable storage medium, where the computer-readable storage medium stores a computer program, and the computer program causes a communications device (for example, a terminal device or a network device) to execute a method according to the first aspect or the second aspect.

According to a tenth aspect, an embodiment of this application provides a computer program product, where the computer program product includes a non-transitory computer-readable storage medium storing a computer program, and the computer program is operable to causes a communications device (for example, a terminal device or a network device) to execute a method according to the first aspect or the second aspect. In some implementations, the computer program product may be a software installation package.

For neighboring cell measurement, a measurement criterion based on a location of a terminal device is introduced in embodiments of this application. Compared with measurement of RSRP, measurement of the location of the terminal device is more accurate, which is conductive to avoiding a misoperation of the terminal device.

### BRIEF DESCRIPTION OF DRAWINGS

FIG. 1 is a schematic diagram of a wireless communications system to which embodiments of this application are applied.
FIG. 2 is a schematic diagram of a transparent payload network architecture.
FIG. 3 is a schematic diagram of a regenerative payload network architecture.
FIG. 4 is a schematic diagram of RSRP of a terminal device at different locations in a cell in a terrestrial network and an NTN.
FIG. 5 is a schematic flowchart of a method for neighboring cell measurement according to an embodiment of this application.
FIG. 6 is a schematic structural diagram of a terminal device according to an embodiment of this application.
FIG. 7 is a schematic structural diagram of a network device according to an embodiment of this application.
FIG. 8 is a schematic structural diagram of an apparatus according to an embodiment of this application.

### DESCRIPTION OF EMBODIMENTS

The following describes the technical solutions in this application with reference to the accompanying drawings.

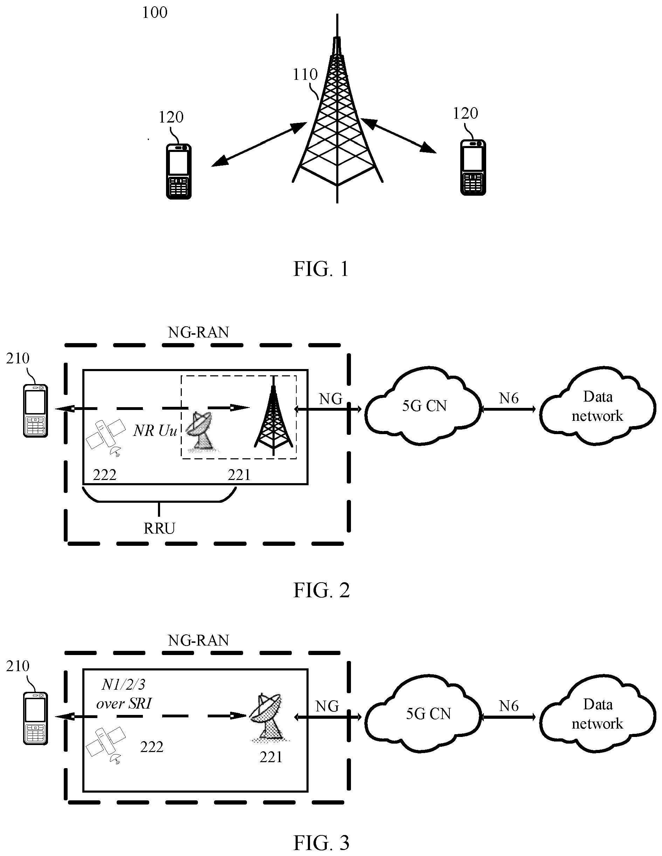

FIG. 1 is a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 exemplarily shows one network device and two terminal devices. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity. This is not limited in embodiments of this application.

It should be understood that the technical solutions in embodiments of this application may be applied to various communications systems, for example, a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may also be applied to a future communications system, such as a sixth generation mobile communications system or a satellite communications system.

A terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, a UE may be used to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal by using a base station.

A network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names below, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to serve as a mobile base station, and one or more cells may move according to a location of the mobile base station. In other examples, a helicopter or an unmanned aerial vehicle may be configured to serve as a device communicating with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

With people's pursuit of a speed, a delay, high-speed mobility, and energy efficiency, as well as diversity and complexity of services in future life, the 3rd generation partnership project (3rd generation partnership project, 3GPP) international standard organization starts to develop 5G. Main scenarios in which 5G is applied may include: enhanced mobile broadband (enhanced mobile broadband, eMBB), ultra-reliable low-latency communications (ultra reliable low latency communications, URLLC), and massive machine type communications (massive machine type communications, mMTC).

For ease of understanding, the following describes communication processes involved in embodiments of this application.

### Radio resource control (radio resource control, RRC) state and mobility management

Currently, three RRC states of a terminal device are defined in a protocol: an RRC connected (RRC_connected) state, an RRC idle (RRC-idle) state, and an RRC inactive (RRC-inactive) state.

The RRC connected state may refer to a state in which the terminal device does not perform RRC release after completing a random access procedure. There is an RRC connection between the terminal device and a network device (for example, an access network device). In the RRC connected state, the terminal device may perform data transmission with the network device, for example, downlink data transmission and/or uplink data transmission. Alternatively, the terminal device may transmit a specific data channel and/or a specific control channel of the terminal device to the network device, to transmit specific information or unicast information of the terminal device.

In the RRC connected state, the network device may determine cell-level location information of the terminal device, that is, the network device may determine a cell to which the terminal device belongs. In the RRC connected state, after a location of the terminal device changes, for example, after the terminal device moves from one cell to another cell, the network device may control the terminal device to perform cell handover (handover). It may be learned that mobility management of the terminal device in the RRC connected state may include cell handover. In addition, mobility management of the terminal device in the RRC connected state may be controlled by the network device. Correspondingly, the terminal device may be handed over to a specified cell according to an instruction delivered by the network device.

The RRC idle state refers to a state in which the terminal device camps on a cell but does not perform random access. The terminal device generally enters the RRC idle state after being powered on or after releasing RRC. In the RRC idle state, there is no RRC connection between the terminal device and the network device (for example, a camping network device), the network device does not store a context of the terminal device, and no connection for the terminal device is established between the network device and a core network. If the terminal device needs to enter the RRC connected state from the RRC idle state, an RRC connection establishment process needs to be initiated.

In the RRC idle state, the core network (core network, CN) may transmit a paging message to the terminal device, that is, a paging process may be triggered by the CN. Optionally, a paging area may alternatively be configured by the CN. In some cases, for a terminal device in the RRC idle state, after a location of the terminal device changes (for example, the terminal device moves from one cell to another cell), the terminal device may initiate a cell reselection (cell reselection) process. In some other cases, for a terminal device in the RRC idle state, when the terminal device needs to access a cell, the terminal device may initiate a cell selection (cell selection) process. That is, mobility management of the terminal device in the RRC idle state may include cell reselection and/or cell selection.

The RRC inactive state is a state that is defined to reduce air interface signalling, quickly restore a wireless connection, and quickly restore a data service. The RRC inactive state is a state between the connected state and the idle state. The terminal device has entered the RRC connected state, and then releases an RRC connection with the network device, but the network device saves the context of the terminal device. In addition, a connection for the terminal device that is established between the network device and the core network is not released, that is, a user plane bearer and a control plane bearer between a RAN and the CN are still maintained, that is, there is a connection between the CN and NR.

In the RRC inactive state, the RAN may transmit a paging message to the terminal device, that is, a paging process may be triggered by the RAN. A paging area based on the RAN is managed by the RAN, and the network device can determine that a location of the terminal device is at a RAN-based paging area level.

In some cases, for a terminal device in the RRC inactive state, after a location of the terminal device changes (for example, the terminal device moves from one cell to another cell), the terminal device may initiate a cell reselection process. In some other cases, for a terminal device in the RRC inactive state, when the terminal device needs to access a cell, the terminal device may initiate a cell selection process. That is, mobility management of the terminal device in the RRC inactive state may include cell reselection and/or cell selection.

### Radio resource management (radio resource management, RRM) measurement

RRM measurement belongs to mobility measurement. Cell selection, cell handover, and cell reselection may all be performed based on an RRM measurement result.

Types of RRM measurement include intra-frequency measurement and inter-frequency or inter-system (inter-radio access technology, inter-RAT) measurement. Intra-frequency measurement includes measurement of other frequency points in a same frequency band of a current serving cell and a neighboring cell frequency point that is the same as a center frequency point of the frequency band supported by the serving cell. Inter-frequency or inter-system measurement includes measurement of a neighboring cell frequency that is different from a center frequency band of frequency bands supported by a serving cell, or measurement of a neighboring cell frequency point that is not in a same system as the serving cell.

When a terminal device is in an RRC idle state or an RRC inactive state, there is no RRC connection between the terminal device and a network device. When an RRM measurement result of a cell (also referred to as a serving cell) on which the terminal device camps is less than a specific threshold, the terminal device may perform RRM measurement on the serving cell and a cell (also referred to as a neighboring cell) adjacent to the serving cell according to intra-frequency, inter-frequency, and/or inter-system neighboring cell information configured by the network device in a system message. When the terminal device is in an RRC connected state, there is an RRC connection between the terminal device and the network device, and the network device configures, by using RRC signalling, the terminal device to perform intra-frequency, inter-frequency, and/or inter-system neighboring cell measurement.

It should be noted that the foregoing RRM measurement result is used to indicate communication quality of the terminal device. In some implementations, the foregoing RRM measurement result may include one or more of the following measurement quantities: signal level (Srxlev), signal strength (Squal), reference signal received power (reference signal received power, RSRP), reference signal received quality (reference signal received quality, RSRQ), signal to noise ratio (signal to noise ratio, SNR), signal to interference plus noise ratio (signal to interference plus noise ratio, SINR), received signal strength indication (received signal strength indication, RSSI), or the like.

The foregoing RRM measurement threshold may include an intra-frequency measurement threshold and an inter-frequency or inter-system measurement threshold.

However, in a version earlier than R17, a terminal device in a narrowband internet of things (narrow band internet of things, NB-IoT) does not support RRM measurement in the connected state. After channel quality of a terminal device in the connected state deteriorates in a serving cell, mobility management is performed by using a radio link failure (radio link failure, RLF) and RRC re-establishment procedure. After triggering an RLF, the terminal device needs to first select a proper cell through searching and measurement, and then initiate RRC connection re-establishment in the cell. To save time for selecting a cell for re-establishment after the terminal device triggers the RLF, a neighboring cell measurement mechanism is introduced into R17 for a terminal device in the connected state in an NB-IoT system. The following briefly describes the neighboring cell measurement mechanism.

The neighboring cell measurement mechanism may be based on an s-measure (s-measure) criterion and a mobility status evaluation criterion. For example, after a terminal device enters the RRC connected state, if the mobility status evaluation criterion is configured on a network device, a reference value (Ref) of narrowband reference signal received power (narrowband reference signal received power, NRSRP) is set to latest measured NRSRP of a serving cell used for cell selection or reselection. Alternatively, if the terminal device does not meet a neighboring cell measurement relaxation criterion before entering the RRC connected state (this criterion will be described in detail below), the terminal device starts a timer T326.

For the terminal device in the connected state, it is assumed that a measurement result of the terminal device on a tested carrier is NRSRP. On the premise that the mobility status evaluation criterion for the terminal device is configured on the network device, if (NRSRP Ref - (NRSRP - PowerOffsetNonAnchor)) > s-measureDeltaP, the terminal device sets NRSRP Ref = NRSRP - PowerOffsetNonAnchor, and the terminal device starts or restarts the timer T326. Herein, PowerOffsetNonAnchor is a non-anchor power offset. On the premise that the mobility status evaluation criterion is not configured on the network device, or T326 is running, if (NRSRP - PowerOffsetNonAnchor) < s-MeasureIntra, the terminal device executes measurement on an intra-frequency neighboring cell; or if (NRSRP - PowerOffsetNonAnchor) < s-MeasureInter, the terminal device executes measurement on an inter-frequency neighboring cell. Herein, s-MeasureIntra indicates the intra-frequency measurement threshold mentioned above, and s-MeasureInter indicates the inter-frequency measurement threshold mentioned above.

In some protocols, it is specified that a terminal device needs to periodically perform RRM measurement, which leads to relatively high energy consumption of the terminal device. In particular, in some measurement scenarios (for example, when the terminal device is in a still state or a moving speed of the terminal device is relatively low), the terminal device does not need to frequently perform RRM measurement. Therefore, to reduce energy consumption of the terminal device, an RRM measurement relaxation (RRM measurement relax) mechanism is introduced.

### RRM measurement relaxation mechanism

RRM measurement relaxation may also be referred to as neighboring cell measurement relaxation or neighboring cell RRM measurement relaxation. RRM measurement relaxation may be implemented in a plurality of manners. For example, a terminal device may implement RRM measurement relaxation by increasing a period of RRM measurement (that is, reducing a quantity of times of RRM measurement). For another example, the terminal device may implement RRM measurement relaxation by reducing a quantity of measured neighboring cells. For still another example, the terminal device may implement RRM measurement relaxation by reducing a quantity of measured frequency points.

RRM measurement relaxation of the terminal device in an RRC idle state or an RRC inactive state may be determined based on whether the terminal device is at an edge cell location of a serving cell and/or whether the terminal device is in a low-mobility state.

Whether the terminal device is in the low-mobility state may be determined based on an RRM measurement result of the serving cell. For example, the terminal device may measure the RRM measurement result of the serving cell at different times. If the RRM measurement result of the serving cell changes slightly at different times, that is, signal quality of the serving cell is relatively stable, it indicates that the terminal device is in the low-mobility state, and the terminal device may perform RRM measurement relaxation.

A process of determining measurement relaxation is described by using an example in which whether a terminal device in NB-IoT performs RRM measurement relaxation is determined.

A network device configures RSRP change evaluation duration TSearchDeltaP and an RSRP change value threshold SSearchDeltaP. When an RSRP change amount of the terminal device in the serving cell within a period of time TSearchDeltaP is less than SSearchDeltaP, it is considered that the terminal device meets a measurement relaxation criterion. That is, within the period of time TSearchDeltaP, (SrxlevRef - Srxlev) < SSearchDeltaP (a formula 1) is met. Herein, Srxlev indicates a current signal amplitude of the serving cell, and SrxlevRef indicates a reference value of the signal amplitude of the serving cell. Generally, usage of SrxlevRef may follow the following rules.

Rule 1: When the serving cell changes after the terminal device performs cell selection or cell reselection, the terminal device needs to set a signal reference value to a current measurement value (that is, Srxlev) of the signal amplitude of the serving cell.

Rule 2: If the signal amplitude of the serving cell is greater than the reference value of the signal amplitude, that is, (Srxlev - SrxlevRef) > 0, the terminal device needs to set the signal reference value to the current measurement value of the signal amplitude of the serving cell.

Rule 3: If the measurement relaxation criterion is not met within the period of time t-SearchDelta (that is, the formula 1 is not met), the terminal device needs to set the signal reference value to the current measurement value of the signal amplitude of the serving cell.

In an implementation, when the terminal device meets the measurement relaxation criterion, a measurement interval for a neighboring cell of the terminal device may be increased to 24 hours.

### NTN

Currently, 3GPP is studying an NTN technology. NTN generally provides communication services to terrestrial users through satellite communication. Satellite communication has many unique advantages over terrestrial communications networks (for example, terrestrial cellular communication).

First, satellite communication is not limited by an area in which a user is located. For example, a common terrestrial communications network cannot cover an area in which a network device cannot be deployed, such as a sea, a mountain, or a desert. Alternatively, the terrestrial communications network does not cover some areas that are sparsely populated. For satellite communication, because one satellite may cover a relatively large terrestrial area, and the satellite may orbit around the earth, theoretically, every corner of the earth may be covered by a satellite communications network.

Second, satellite communication has great social value. Satellite communication may cover remote mountainous and poor countries or regions at lower costs, thereby enabling people in these regions to enjoy advanced voice communications and mobile internet technologies. From this perspective, satellite communication is conductive to narrowing a digital divide between these regions and the developed regions and promote development of these regions.

Third, satellite communication has an advantage of a long distance, and an increase in the communication distance does not significantly increase a communication cost.

Finally, satellite communication is highly stable and is not affected by natural disasters.

Communications satellites are divided into a low earth orbit (low earth orbit, LEO) satellite, a medium earth orbit (medium earth orbit, MEO) satellite, a geostationary earth orbit (geostationary earth orbit, GEO) satellite, a high elliptical orbit (high elliptical orbit, HEO) satellite, and the like according to different orbital altitudes. At a current stage, LEO satellites and GEO satellites are mainly studied.

Generally, a height range of the LEO satellite is 500 km to 1500 km. Accordingly, an orbit period of the LEO satellite is about 1.5 hours to 2 hours. For the LEO satellite, generally a signal propagation delay of inter-user single-hop communication is less than 20 ms. A maximum satellite visible time of the LEO satellite is about 20 minutes. The LEO satellite has advantages of a short signal propagation distance, low link loss, and a low requirement on transmit power of a terminal device of a user.

An orbit altitude of the GEO satellite is 35786 km. A rotation period of the GEO satellite around the earth is 24 hours. For the GEO satellite, generally a signal propagation delay of inter-user single-hop communication is about 250ms.

To ensure satellite coverage and improve a system capacity of an entire satellite communications system, a satellite usually uses a plurality of beams to cover a terrestrial area. Therefore, one satellite may generate dozens or even hundreds of beams to cover the terrestrial area. One beam of the satellite may cover a terrestrial area of approximately dozens to hundreds of kilometers in diameter.

Currently, an NTN system includes an NR-NTN system and an internet of things (internet of things, IoT)-NTN system.

### Satellite network architecture

Currently, 3GPP considers two types of satellites: one is a transparent payload (transparent payload) satellite, and the other is a regenerative payload (regenerative payload) satellite. With reference to FIG. 2 to FIG. 3, the following separately describes a network architecture including a transparent payload satellite and a network architecture including a regenerative payload satellite.

In the satellite network architecture shown in FIG. 2 to FIG. 3, the satellite network architecture may include a terminal device 210, a satellite node 222, and a terrestrial receiving station 221 ("terrestrial station" for short). There is wireless communication between the terminal device 210 and the satellite node 222, and the terminal device 210 may transmit data to the satellite node 222 over a link between the terminal device 210 and the satellite node 222. For example, the terminal device 210 may transmit data to the satellite node 222 over a service link (service link). Accordingly, after receiving the data, the satellite node 222 may transmit the data to the terrestrial receiving station 221 over a link between the satellite node 222 and the terrestrial receiving station 221. For example, the satellite node 222 may transmit the data to the terrestrial receiving station 221 over a radio link (for example, a feeder link (feeder link)). Accordingly, after receiving the data from the satellite node 222, the terrestrial receiving station 221 transmits the data to a core network (data network), and further processes the data by using the core network, for example, performs data interaction with another terminal. It may be understood that the service link herein refers to the link between the terminal device 210 and the satellite node 222, and the feeder link refers to the link between the satellite node 222 and the terrestrial receiving station 221. In another possible embodiment, the link between the terminal device and the satellite node and/or the link between the satellite node and the terrestrial receiving station may also be represented by another term, which is not limited in this application.

The satellite node 222 may be classified into two types. A first type of satellite node is used only for forwarding, that is, having only a transparent payload function. In some implementations, such a satellite node may provide only one or more of a radio frequency filtering function, a frequency conversion function, or a power amplification function. For such a satellite node, a signal received from a terminal device may be amplified and then transmitted to the terrestrial receiving station. No processing is performed on the signal of the terminal device at the satellite node, as shown in FIG. 2. The terminal device may communicate with the satellite node by using an NR-Uu interface, the satellite node may communicate with the terrestrial receiving station (for example, may include an NTN remote radio unit (remote radio unit, RRU) and a gNB) by using an NR-Uu interface, the terrestrial receiving station may communicate with a 5G core network (5G CN) by using an N1 interface, an N2 interface, or an N3 interface, and the 5G CN may communicate with a data network by using an N6 interface.

A second type of satellite node has a complete processing function of a base station. For a terrestrial terminal device, the satellite node is a base station, and communication between the satellite node and the terminal device is basically consistent with normal 5G communication, as shown in FIG. 3. In some implementations, such a satellite node may further provide one or more of the following functions: a demodulation function, a decoding function, a routing function, a conversion function, an encoding function, or a modulation function. The terminal device may communicate with the satellite node by using an NR-Uu interface. The satellite node may communicate with the terrestrial receiving station by using a satellite radio interface (satellite radio interface, SRI). The SRI interface may be used to transmit an interface message (for example, an N2 or N3 interface message) between the satellite node and a 5G CN. The terrestrial receiving station may communicate with the 5G CN by using an N1 interface, an N2 interface, or an N3 interface, and the 5G CN may communicate with a data network by using an N6 interface.

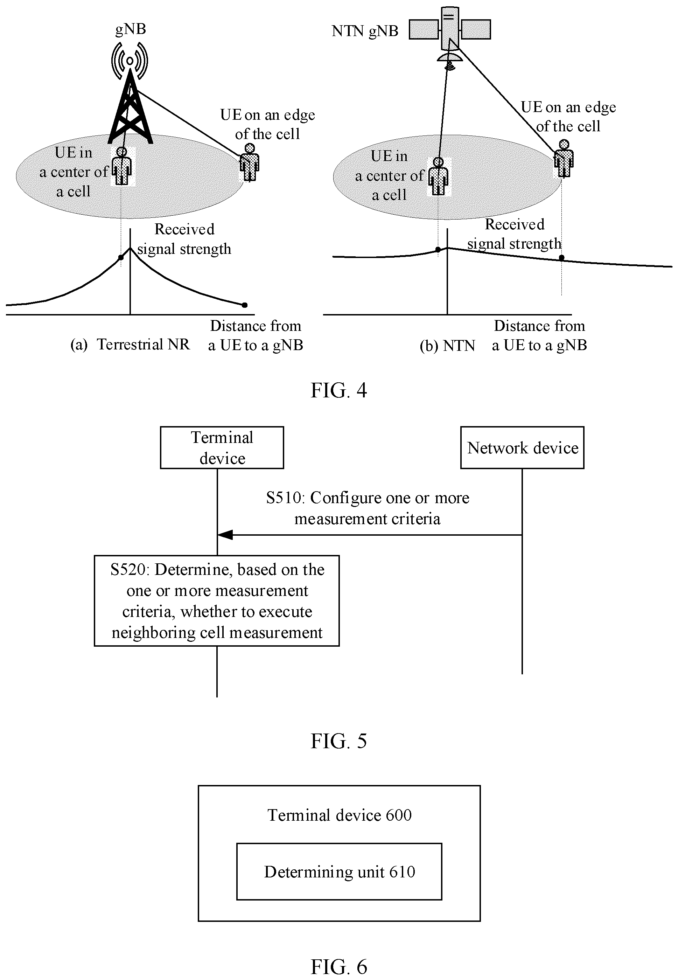

In a terrestrial network, reference signal received power (N)RSRP of a terminal device in a center of a cell is significantly higher than (N)RSRP of the terminal device on an edge of the cell. Because there is an evident "near-far effect" (referring to FIG. 4(a)), it may be determined, based on (N)RSRP measurement, whether a condition for enabling neighboring cell measurement is met. That is, in a case in which an s-measure criterion is configured on a network device, the terminal device may determine, by measuring (N)RSRP of a serving cell, whether a channel status of the terminal device is not good enough. In a case in which a mobility evaluation criterion is configured on a network, the terminal device may determine, based on an (N)RSRP change amount of the terminal device in the serving cell, whether the terminal device does not meet a low-mobility state or a still state.

However, in an NTN system, for a terminal device that is located in a center of a cell and a terminal device that is located on an edge of the cell, a difference between RSRP values corresponding to the terminal devices is not evident (referring to FIG. 4(b)). If it is determined, based on RSRP measurement, whether the terminal devices meet an s-measure criterion or/and a mobility evaluation criterion, it is difficult to set a proper RSRP threshold on the network device on the one hand. On the other hand, there is an error in RSRP measurement, which is likely to cause a misoperation of the terminal devices. For example, in a case in which the s-measure criterion is configured on the network device, for a user in a center of a cell, neighboring cell measurement is enabled because measured RSRP is low, thereby increasing unnecessary power consumption of a terminal device. For a user on an edge of the cell, neighboring cell measurement is not enabled because measured RSRP is high. After a terminal device triggers an RLF, an RRC re-establishment time is added, thereby affecting experience of the terminal device.

In the NTN system, although there is no evident difference between received signal strength of a terminal device in a center of a serving cell and that of a terminal device on an edge of the serving cell, a difference between locations of the terminal devices is relatively evident. For example, a difference between global navigation satellite system (global navigation satellite system, GNSS) locations of the terminal devices is evident. For another example, a difference between distances between the terminal devices and the center of the cell is evident.

Therefore, to resolve the foregoing problem, an embodiment of this application provides a method for neighboring cell measurement. The method may be used to determine, based on a location of a terminal device, whether to execute neighboring cell measurement, thereby avoiding a misoperation of the terminal device.

With reference to FIG. 5, the following describes a procedure of the method for neighboring cell measurement according to this embodiment of this application.

Referring to FIG. 5, in step S510, a network device configures one or more measurement criteria. The one or more measurement criteria may be used to determine whether to execute neighboring cell measurement. The one or more measurement criteria may include a measurement criterion based on a location of the terminal device.

In some embodiments, the network device may configure the one or more measurement criteria by using a system message. For example, the network device may configure the one or more measurement criteria by using a system information block (system information block, SIB) in the system message. For another example, the network device may configure the one or more measurement criteria by using RRC signalling.

In step S520, the terminal device determines, based on the one or more measurement criteria, whether to execute neighboring cell measurement.

For neighboring cell measurement, a measurement criterion based on a location of a terminal device is introduced in this embodiment of this application. Compared with measurement of RSRP, measurement of the location of the terminal device is more accurate, which is conductive to avoiding a misoperation of the terminal device.

In some embodiments, the measurement criterion based on the location of the terminal device may include one or more of the following: a first measurement criterion, used to evaluate a mobility status of the terminal device; or a second measurement criterion, used to instruct to enable a threshold condition of intra-frequency measurement and/or inter-frequency measurement.

In some embodiments, the mobility status of the terminal device is evaluated by using the first measurement criterion based on one or more of the following: a first threshold, a second threshold, an RRC status of the terminal device, a current location of the terminal device, a reference location of the terminal device, or a first timer.

In some embodiments, the first threshold may include a thresholdof a location change amount of the terminal device (for example, s-MeasureDeltaLocation). A location of the terminal device mentioned herein may refer to a global navigation satellite system (global navigation satellite system, GNSS) location of the terminal device.

In some embodiments, the first threshold may include a threshold of a distance change amount of the terminal device relative to a cell reference location (for example, s-MeasureDeltaDistance). The cell reference location may include one or more of the following: a central location of a serving cell of the terminal device; or a location of a satellite corresponding to the serving cell of the terminal device. The central location of the serving cell of the terminal device may also be referred to as a reference point of the serving cell, which, for example, may refer to a central point of terrestrial coverage of the cell.

In some embodiments, a second threshold may be used to indicate evaluation duration of the mobility status. The first threshold and the second threshold may be used together, that is, whether the terminal device meets the first threshold is evaluated within the evaluation duration specified by the second threshold. That the first threshold is the threshold s-MeasureDeltaLocation of the location change amount of the terminal device is used as an example. In this case, the second threshold may be represented by t-MeasureDeltaLocation, which is used to evaluate whether the location change amount of the terminal device exceeds s-MeasureDeltaLocation within the evaluation duration corresponding to the second threshold. That the first threshold is the threshold s-MeasureDeltaDistance of the distance change amount of the terminal device relative to the cell reference location is used as an example. In this case, the second threshold may be represented by t-MeasureDeltaDistance, which is used to evaluate whether the distance change amount of the terminal device relative to the cell reference location exceeds s-MeasureDeltaDistance within the evaluation duration corresponding to the second threshold.

The first timer may refer to a timer associated with the first measurement criterion. In some embodiments, timing duration of the first timer may be determined based on the evaluation duration of the mobility status. For example, the timing duration of the first timer may be equal to the evaluation duration of the mobility status.

In some embodiments, the reference location of the terminal device may be monitored and updated in a process of evaluating the mobility status of the terminal device based on the first measurement criterion. The reference location of the terminal device may be determined or updated based on one or more specific conditions (which is hereinafter referred to as a first condition). For example, if the first condition is met, the reference location of the terminal device may be determined as or updated to the current location of the terminal device.

The first condition may be determined based on one or more of the following: whether the terminal device enters an RRC connected state from an RRC non-connected state; whether the first measurement criterion is configured for the terminal device; or a relationship between a difference between the current location of the terminal device and the reference location of the terminal device and the first threshold. As an example, if the terminal device enters the RRC connected state from the RRC non-connected state, and the first measurement criterion is configured for the terminal device, the current location of the terminal device is an initial value of the reference location of the terminal device. As another example, if the first measurement criterion is configured for the terminal device, and the difference between the current location of the terminal device and the reference location of the terminal device is greater than the first threshold, the current location of the terminal device is an updated value of the reference location of the terminal device.

In an implementation, starting or restarting of the first timer may be determined based on whether a second condition is met. The second condition may be determined based on one or more of the following: whether the terminal device enters the RRC connected state from the RRC non-connected state; whether the first measurement criterion is configured for the terminal device; whether the terminal device in the RRC non-connected state meets a neighboring cell measurement relaxation criterion; or a relationship between a difference between the current location of the terminal device and the reference location of the terminal device and the first threshold.

As an example, the second condition may include one or more of the following: if the terminal device enters an RRC connected state from an RRC non-connected state, the first measurement criterion is configured for the terminal device, and the terminal device in the RRC non-connected state does not meet the neighboring cell measurement relaxation criterion, then starting the first timer; or if the first measurement criterion is configured for the terminal device, and the difference between the current location of the terminal device and the reference location of the terminal device is greater than the first threshold, starting or restarting the first timer.

That the terminal device enters the RRC connected state from the RRC non-connected state generally includes two cases. In a first case, the terminal device in the RRC non-connected state does not meet the neighboring cell measurement relaxation criterion. In a second case, the terminal device in the RRC non-connected state meets the neighboring cell measurement relaxation criterion. In the first case, generally the terminal device needs to execute one or more measurement criteria, to determine whether to enable neighboring cell measurement. In this case, if the first measurement criterion is configured for the terminal device, the first timer may be started or restarted. In the second case, when the terminal device is in the RRC non-connected state, the terminal device is in a low-mobility state or a still state, and a requirement of the terminal device for performing neighboring cell selection, reselection, or handover may be relatively low. Therefore, even if the first measurement criterion is configured for the terminal device, the first timer may not be started in this case.

If the first measurement criterion is configured for the terminal device, and the difference between the current location of the terminal device and the reference location of the terminal device is greater than the first threshold, that is, the difference between the current location of the terminal device and the reference location of the terminal device is greater than s-MeasureDeltaLocation or s-MeasureDeltaDistance, then the first timer may be started or restarted.

In an implementation, it may be determined, based on a running status of the first timer, whether further measurement is required, to determine whether to enable neighboring cell measurement.

In some embodiments, the measurement criterion based on the location of the terminal device may further include the second measurement criterion. Whether the second measurement criterion is met may be determined based on one or more of the following: a current location of the terminal device; a cell reference location; or a third threshold.

In an implementation, the third threshold may be a distance threshold between the current location of the terminal device and the cell reference location (for example, s-MeasureDistance). The cell reference location may refer to a central location of a serving cell of the terminal device, or may refer to a location of a satellite corresponding to the serving cell of the terminal device.

In an implementation, if the distance between the current location of the terminal device and the cell reference location is greater than or equal to the third threshold, the second measurement criterion is met.

That the measurement criterion based on the location of the terminal device is configured for the terminal device may include a plurality of cases. In some cases, the first measurement criterion and the second measurement criterion are configured for the terminal device. In some other cases, only the second measurement criterion is configured for the terminal device. According to different configurations of the measurement criteria, the measurement criterion that meets the location of the terminal device may include the following cases: if the first measurement criterion is not configured for the terminal device, and the terminal device meets the second measurement criterion, then the measurement criterion based on the location of the terminal device is met; or if the first timer associated with the first measurement criterion is in a running state, and the terminal device meets the second measurement criterion, then the measurement criterion based on the location of the terminal device is met.

In an implementation, if the measurement criterion based on the location of the terminal device is met, the neighboring cell measurement is enabled.

In another implementation, the one or more measurement criteria further include the measurement criterion based on cell signal quality mentioned above. The measurement criterion based on cell signal quality may include, for example, a third measurement criterion (that is, neighCellMeasCriteria) and a fourth measurement criterion (that is, s-MeasureIntra and/or s-MeasureInter) based on (N)RSRP.

In some embodiments, that the measurement criterion based on cell signal quality is met may include the following cases: if the third measurement criterion is not configured for the terminal device, and the terminal device meets the fourth measurement criterion, the measurement criterion based on cell signal quality is met; or if a timer associated with the third measurement criterion (for example, T326 mentioned above) is in the running state, and the terminal device meets the fourth measurement criterion, the measurement criterion based on cell signal quality is met.

If at least one of the measurement criterion based on the location of the terminal device or the measurement criterion based on cell signal quality is met, the neighboring cell measurement is enabled. That is, if the measurement criterion based on the location of the terminal device is met, but the measurement criterion based on cell signal quality is not met, the neighboring cell measurement is enabled; or if the measurement criterion based on the location of the terminal device is not met, but the measurement criterion based on cell signal quality is met, the neighboring cell measurement is enabled; or if the measurement criterion based on the location of the terminal device is met, and the measurement criterion based on cell signal quality is met, the neighboring cell measurement is enabled.

The following describes in detail the method for neighboring cell measurement according to this embodiment of this application by using an example in which the first measurement criterion is based on a location change amount threshold of the terminal device (s-MeasureDeltaLocation), and the second measurement criterion is based on a distance threshold between the current location of the terminal device and the satellite of the serving cell (s-MeasureDistance).

If the network device configures the first measurement criterion for the terminal device, the first measurement criterion may include the location change amount threshold s-MeasureDeltaLocation and the evaluation duration t-MeasureDeltaLocation. If the network device configures the second measurement criterion for the terminal device, the second measurement criterion may include the distance threshold s-MeasureDistance.

A location reference value Lref of the terminal device is introduced into the first measurement criterion, and the first timer T3YY is defined. The timing duration of the T3YY timer is t-MeasureDeltaLocation.

When the terminal device enters the RRC connected state from the RRC non-connected state (that is, the RRC idle state or the RRC inactive state), if the first measurement criterion is configured for the terminal device, Lref may be initialized (Lref is set to the current location of the terminal device).

When the terminal device enters the RRC connected state from the RRC non-connected state (that is, the RRC idle state or the RRC inactive state), if the first measurement criterion is configured for the terminal device and the terminal device in the RRC non-connected state does not meet the neighboring cell measurement relaxation criterion, the terminal device may start the T3YY timer.

If the first measurement criterion is configured for the terminal device, whether a location change amount of the current location L of the terminal device relative to Lref is greater than s-MeasureDeltaLocation may be determined. If the change amount of the current location L relative to Lref is greater than s-MeasureDeltaLocation, Lref may be updated to the current location L of the terminal device, and the T3YY timer may be started or restarted.

If the second measurement criterion is configured for the terminal device, a size relationship between a distance from the terminal device to the satellite of the serving cell and a first distance threshold s-MeasureDistance is determined. If the distance from the terminal device to the satellite of the serving cell is greater than (or equal to) the first distance threshold s-MeasureDistance, it is considered that the second measurement criterion is met.

If both the first measurement criterion and the second measurement criterion are configured for the terminal device, when the T3YY timer runs and the terminal device meets the second measurement criterion, it may be considered that the measurement criterion based on the location of the terminal device is met. In this case, the terminal device may enable the neighboring cell measurement.

If only the second measurement criterion is configured for the terminal device, when the terminal device meets the second measurement criterion, it may be considered that the measurement criterion based on the location of the terminal device is met. In this case, the terminal device may enable the neighboring cell measurement.

The neighboring cell measurement may include intra-frequency and/or inter-frequency measurement. It should be noted that a condition for enabling intra-frequency or inter-frequency measurement may be further set according to different cases, which is not limited in this application.

With reference to FIG. 1 to FIG. 5, the foregoing describes method embodiments of this application in detail. With reference to FIG. 6 to FIG. 8, the following describes apparatus embodiments of this application in detail. It should be understood that the descriptions of the method embodiments correspond to the descriptions of the apparatus embodiments, and therefore, for parts that are not described in detail, refer to the foregoing method embodiments.

FIG. 6 is a schematic block diagram of a terminal device according to an embodiment of this application. The terminal device 600 may include a determining unit 610.

The determining unit 610 may be configured to determine, based on one or more measurement criteria, whether to execute neighboring cell measurement, where the one or more measurement criteria include a measurement criterion based on a location of the terminal device.

In a possible implementation, the measurement criterion based on the location of the terminal device includes one or more of the following: a first measurement criterion, used to evaluate a mobility status of the terminal device; or a second measurement criterion, used to instruct to enable a threshold condition of intra-frequency measurement and/or inter-frequency measurement.

In a possible implementation, the mobility status is evaluated by using the first measurement criterion based on one or more of the following: a first threshold, including a threshold of a location change amount of the terminal device and/or a threshold of a distance change amount of the terminal device relative to a cell reference location; a second threshold, used to indicate evaluation duration of the mobility status; a radio resource control RRC status of the terminal device; a current location of the terminal device; a reference location of the terminal device; or a first timer, where timing duration of the first timer is determined based on evaluation duration of the mobility status.

In a possible implementation, if a first condition is met, the reference location of the terminal device is determined as or updated to the current location of the terminal device, where the first condition is determined based on one or more of the following: whether the terminal device enters an RRC connected state from an RRC non-connected state; whether the first measurement criterion is configured for the terminal device; or a relationship between a difference between the current location of the terminal device and the reference location of the terminal device and the first threshold.

In a possible implementation, the first condition includes one or more of the following: if the terminal device enters the RRC connected state from the RRC non-connected state, and the first measurement criterion is configured for the terminal device, the current location of the terminal device is an initial value of the reference location of the terminal device; or if the first measurement criterion is configured for the terminal device, and the difference between the current location of the terminal device and the reference location of the terminal device is greater than the first threshold, the current location of the terminal device is an updated value of the reference location of the terminal device.

In a possible implementation, if a second condition is met, the first timer is started or restarted, where the second condition is determined based on one or more of the following: whether the terminal device enters an RRC connected state from an RRC non-connected state; whether the first measurement criterion is configured for the terminal device; whether the terminal device in the RRC non-connected state meets a neighboring cell measurement relaxation criterion; or a relationship between a difference between the current location of the terminal device and the reference location of the terminal device and the first threshold.

In a possible implementation, the second condition includes one or more of the following: if the terminal device enters an RRC connected state from an RRC non-connected state, the first measurement criterion is configured for the terminal device, and the terminal device in the RRC non-connected state does not meet the neighboring cell measurement relaxation criterion, starting the first timer; or if the first measurement criterion is configured for the terminal device, and the difference between the current location of the terminal device and the reference location of the terminal device is greater than the first threshold, starting or restarting the first timer.

In a possible implementation, whether the second measurement criterion is met is determined based on one or more of the following: a current location of the terminal device; a cell reference location; or a third threshold, where the third threshold is a threshold of a distance between the current location of the terminal device and the cell reference location.

In a possible implementation, if the distance between the current location of the terminal device and the cell reference location is greater than or equal to the third threshold, the second measurement criterion is met.

In a possible implementation, if the first measurement criterion is not configured for the terminal device, and the terminal device meets the second measurement criterion, the measurement criterion based on the location of the terminal device is met; or if a first timer associated with the first measurement criterion is in a running state, and the terminal device meets the second measurement criterion, the measurement criterion based on the location of the terminal device is met.

In a possible implementation, if the measurement criterion based on the location of the terminal device is met, the neighboring cell measurement is enabled.

In a possible implementation, the one or more measurement criteria further include a measurement criterion based on cell signal quality.

In a possible implementation, if at least one of the measurement criterion based on the location of the terminal device or the measurement criterion based on cell signal quality is met, the neighboring cell measurement is enabled.

In a possible implementation, the cell reference location includes one or more of the following: a central location of a serving cell of the terminal device; or a location of a satellite corresponding to the serving cell of the terminal device.

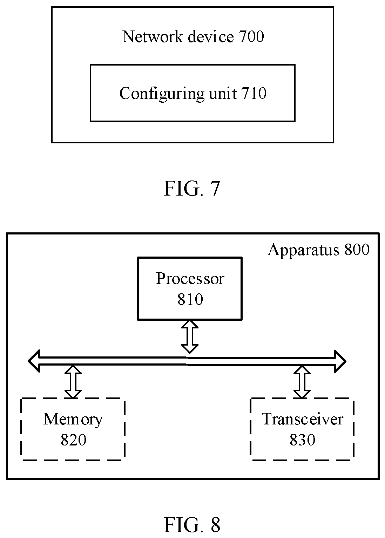

FIG. 7 is a schematic block diagram of a network device according to an embodiment of this application. The network device 700 may include a configuring unit 710.

The configuring unit 710 may be configured to configure one or more measurement criteria, where the one or more measurement criteria are used to determine whether to execute neighboring cell measurement, and the one or more measurement criteria include a measurement criterion based on a location of a terminal device.

In a possible implementation, the measurement criterion based on the location of the terminal device includes one or more of the following: a first measurement criterion, used to evaluate a mobility status of the terminal device; or a second measurement criterion, used to instruct to enable a threshold condition of intra-frequency measurement and/or inter-frequency measurement.

In a possible implementation, the mobility status is evaluated by using the first measurement criterion based on one or more of the following: a first threshold, including a threshold of a location change amount of the terminal device and/or a threshold of a distance change amount of the terminal device relative to a cell reference location; a second threshold, used to indicate evaluation duration of the mobility status; a radio resource control RRC status of the terminal device; a current location of the terminal device; a reference location of the terminal device; or a first timer, where timing duration of the first timer is determined based on evaluation duration of the mobility status.

In a possible implementation, if a first condition is met, the reference location of the terminal device is determined as or updated to the current location of the terminal device, where the first condition is determined based on one or more of the following: whether the terminal device enters an RRC connected state from an RRC non-connected state; whether the first measurement criterion is configured for the terminal device; or a relationship between a difference between the current location of the terminal device and the reference location of the terminal device and the first threshold.

In a possible implementation, the first condition includes one or more of the following: if the terminal device enters the RRC connected state from the RRC non-connected state, and the first measurement criterion is configured for the terminal device, the current location of the terminal device is an initial value of the reference location of the terminal device; or if the first measurement criterion is configured for the terminal device, and the difference between the current location of the terminal device and the reference location of the terminal device is greater than the first threshold, the current location of the terminal device is an updated value of the reference location of the terminal device.

In a possible implementation, if a second condition is met, the first timer is started or restarted, where the second condition is determined based on one or more of the following: whether the terminal device enters an RRC connected state from an RRC non-connected state; whether the first measurement criterion is configured for the terminal device; whether the terminal device in the RRC non-connected state meets a neighboring cell measurement relaxation criterion; or a relationship between a difference between the current location of the terminal device and the reference location of the terminal device and the first threshold.

In a possible implementation, the second condition includes one or more of the following: if the terminal device enters an RRC connected state from an RRC non-connected state, the first measurement criterion is configured for the terminal device, and the terminal device in the RRC non-connected state does not meet the neighboring cell measurement relaxation criterion, starting the first timer; or if the first measurement criterion is configured for the terminal device, and the difference between the current location of the terminal device and the reference location of the terminal device is greater than the first threshold, starting or restarting the first timer.

In a possible implementation, whether the second measurement criterion is met is determined based on one or more of the following: a current location of the terminal device; a cell reference location; or a third threshold, where the third threshold is a threshold of a distance between the current location of the terminal device and the cell reference location.

In a possible implementation, if the distance between the current location of the terminal device and the cell reference location is greater than or equal to the third threshold, the second measurement criterion is met.

In a possible implementation, if the first measurement criterion is not configured for the terminal device, and the terminal device meets the second measurement criterion, the measurement criterion based on the location of the terminal device is met; or if a first timer associated with the first measurement criterion is in a running state, and the terminal device meets the second measurement criterion, the measurement criterion based on the location of the terminal device is met.

In a possible implementation, if the measurement criterion based on the location of the terminal device is met, the neighboring cell measurement is enabled.

In a possible implementation, the one or more measurement criteria further include a measurement criterion based on cell signal quality.

In a possible implementation, if at least one of the measurement criterion based on the location of the terminal device or the measurement criterion based on cell signal quality is met, the neighboring cell measurement is enabled.

In a possible implementation, the cell reference location includes one or more of the following: a central location of a serving cell of the terminal device; or a location of a satellite corresponding to the serving cell of the terminal device.

FIG. 8 is a schematic structural diagram of a communications apparatus according to an embodiment of this application. Dashed lines in FIG. 8 indicate that units or modules are optional. The apparatus 800 may be configured to implement a method described in the foregoing method embodiments. The apparatus 800 may be a chip, a terminal device, or a network device.

The apparatus 800 may include one or more processors 810. The processor 810 may support the apparatus 800 to implement a method described in the foregoing method embodiments. The processor 810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 800 may further include one or more memories 820. The memory 820 stores a program, and the program may be executed by the processor 810, so that the processor 810 executes a method described in the foregoing method embodiments. The memory 820 may be separate from the processor 810 or may be integrated into the processor 810.

The apparatus 800 may further include a transceiver 830. The processor 810 may communicate with another device or chip by using the transceiver 830. For example, the processor 810 may transmit data to and receive data from another device or chip by using the transceiver 830.

An embodiment of this application further provides a computer-readable storage medium, configured to store a program. The computer-readable storage medium may be applied to a terminal or a network device provided in embodiments of this application, and the program causes a computer to execute a method executed by the terminal device or the network device in embodiments of this application.

An embodiment of this application further provides a computer program product. The computer program product includes a program. The computer program product may be applied to a terminal or a network device provided in embodiments of this application, and the program causes a computer to execute a method executed by the terminal or the network device in embodiments of this application.

An embodiment of this application further provides a computer program. The computer program may be applied to a terminal device or a network device provided in embodiments of this application, and the computer program causes a computer to execute a method executed by the terminal device or the network device in embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

The "indication" mentioned in embodiments of this application may be a direct indication or an indirect indication, or indicate an association relationship. For example, if A indicates B, it may mean that A directly indicates B, for example, B may be obtained from A. Alternatively, it may mean that A indirectly indicates B, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "pre-defining" or "pre-configuring" can be implemented by pre-storing corresponding code or a corresponding table in a device (for example, including a terminal device and a network device) or in other manners that can be used for indicating related information. A specific implementation thereof is not limited in this application. For example, pre-defining may refer to being defined in a protocol.

In embodiments of this application, the "protocol" may indicate a standard protocol in the communication field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions in embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for neighboring cell measurement, comprising:
determining, by a terminal device based on one or more measurement criteria, whether to execute neighboring cell measurement, wherein the one or more measurement criteria comprise a measurement criterion based on a location of the terminal device.

2. The method according to claim 1, wherein the measurement criterion based on the location of the terminal device comprises one or more of following:
a first measurement criterion, used to evaluate a mobility status of the terminal device; or
a second measurement criterion, used to instruct to enable a threshold condition of intra-frequency measurement and/or inter-frequency measurement.

3. The method according to claim 2, wherein the mobility status is evaluated by using the first measurement criterion based on one or more of following:
a first threshold, comprising a threshold of a location change amount of the terminal device and/or a threshold of a distance change amount of the terminal device relative to a cell reference location;
a second threshold, used to indicate evaluation duration of the mobility status;
a radio resource control RRC status of the terminal device;
a current location of the terminal device;
a reference location of the terminal device; or
a first timer, wherein timing duration of the first timer is determined based on evaluation duration of the mobility status.

4. The method according to claim 3, wherein if a first condition is met, the reference location of the terminal device is determined as or updated to the current location of the terminal device,
wherein the first condition is determined based on one or more of following:
whether the terminal device enters an RRC connected state from an RRC non-connected state;
whether the first measurement criterion is configured for the terminal device; or
a relationship between a difference between the current location of the terminal device and the reference location of the terminal device and the first threshold.

5. The method according to claim 4, wherein the first condition comprises one or more of following:
if the terminal device enters the RRC connected state from the RRC non-connected state, and the first measurement criterion is configured for the terminal device, the current location of the terminal device is an initial value of the reference location of the terminal device; or
if the first measurement criterion is configured for the terminal device, and the difference between the current location of the terminal device and the reference location of the terminal device is greater than the first threshold, the current location of the terminal device is an updated value of the reference location of the terminal device.

6. The method according to claim 3 or 4, wherein if a second condition is met, the first timer is started or restarted,
wherein the second condition is determined based on one or more of following:
whether the terminal device enters an RRC connected state from an RRC non-connected state;
whether the first measurement criterion is configured for the terminal device;
whether the terminal device in the RRC non-connected state meets a neighboring cell measurement relaxation criterion; or
a relationship between a difference between the current location of the terminal device and the reference location of the terminal device and the first threshold.

7. The method according to claim 6, wherein the second condition comprises one or more of following:
if the terminal device enters the RRC connected state from the RRC non-connected state, the first measurement criterion is configured for the terminal device, and the terminal device in the RRC non-connected state does not meet the neighboring cell measurement relaxation criterion, starting the first timer; or
if the first measurement criterion is configured for the terminal device, and the difference between the current location of the terminal device and the reference location of the terminal device is greater than the first threshold, starting or restarting the first timer.

8. The method according to any one of claims 2 to 7, wherein whether the second measurement criterion is met is determined based on one or more of following:
a current location of the terminal device;
a cell reference location; or
a third threshold, wherein the third threshold is a threshold of a distance between the current location of the terminal device and the cell reference location.

9. The method according to claim 8, wherein if the distance between the current location of the terminal device and the cell reference location is greater than or equal to the third threshold, the second measurement criterion is met.

10. The method according to any one of claims 2 to 9, wherein
if the first measurement criterion is not configured for the terminal device, and the terminal device meets the second measurement criterion, the measurement criterion based on the location of the terminal device is met; or
if a first timer associated with the first measurement criterion is in a running state, and the terminal device meets the second measurement criterion, the measurement criterion based on the location of the terminal device is met.

11. The method according to claim 10, wherein if the measurement criterion based on the location of the terminal device is met, the neighboring cell measurement is enabled.

12. The method according to any one of claims 1 to 10, wherein the one or more measurement criteria further comprise a measurement criterion based on cell signal quality.

13. The method according to claim 12, wherein if at least one of the measurement criterion based on the location of the terminal device or the measurement criterion based on cell signal quality is met, the neighboring cell measurement is enabled.

14. The method according to any one of claims 3 to 9, wherein the cell reference location comprises one or more of following:
a central location of a serving cell of the terminal device; or
a location of a satellite corresponding to a serving cell of the terminal device.

15. A method for neighboring cell measurement, comprising:
configuring, by a network device, one or more measurement criteria, wherein the one or more measurement criteria are used to determine whether to execute neighboring cell measurement, and the one or more measurement criteria comprise a measurement criterion based on a location of a terminal device.

16. The method according to claim 15, wherein the measurement criterion based on the location of the terminal device comprises one or more of following:
a first measurement criterion, used to evaluate a mobility status of the terminal device; or
a second measurement criterion, used to instruct to enable a threshold condition of intra-frequency measurement and/or inter-frequency measurement.

17. The method according to claim 16, wherein the mobility status is evaluated by using the first measurement criterion based on one or more of following:
a first threshold, comprising a threshold of a location change amount of the terminal device and/or a threshold of a distance change amount of the terminal device relative to a cell reference location;
a second threshold, used to indicate evaluation duration of the mobility status;
a radio resource control RRC status of the terminal device;
a current location of the terminal device;
a reference location of the terminal device; or
a first timer, wherein timing duration of the first timer is determined based on evaluation duration of the mobility status.

18. The method according to claim 17, wherein if a first condition is met, the reference location of the terminal device is determined as or updated to the current location of the terminal device,
wherein the first condition is determined based on one or more of following:
whether the terminal device enters an RRC connected state from an RRC non-connected state;
whether the first measurement criterion is configured for the terminal device; or
a relationship between a difference between the current location of the terminal device and the reference location of the terminal device and the first threshold.

19. The method according to claim 18, wherein the first condition comprises one or more of following:
if the terminal device enters the RRC connected state from the RRC non-connected state, and the first measurement criterion is configured for the terminal device, the current location of the terminal device is an initial value of the reference location of the terminal device; or
if the first measurement criterion is configured for the terminal device, and the difference between the current location of the terminal device and the reference location of the terminal device is greater than the first threshold, the current location of the terminal device is an updated value of the reference location of the terminal device.

20. The method according to claim 17 or 18, wherein if a second condition is met, the first timer is started or restarted,
wherein the second condition is determined based on one or more of following:
whether the terminal device enters an RRC connected state from an RRC non-connected state;
whether the first measurement criterion is configured for the terminal device;
whether the terminal device in the RRC non-connected state meets a neighboring cell measurement relaxation criterion; or
a relationship between a difference between the current location of the terminal device and the reference location of the terminal device and the first threshold.

21. The method according to claim 20, wherein the second condition comprises one or more of following:
if the terminal device enters the RRC connected state from the RRC non-connected state, the first measurement criterion is configured for the terminal device, and the terminal device in the RRC non-connected state does not meet the neighboring cell measurement relaxation criterion, starting the first timer; or
if the first measurement criterion is configured for the terminal device, and the difference between the current location of the terminal device and the reference location of the terminal device is greater than the first threshold, starting or restarting the first timer.

22. The method according to any one of claims 16 to 21, wherein whether the second measurement criterion is met is determined based on one or more of following:
a current location of the terminal device;
a cell reference location; or
a third threshold, wherein the third threshold is a threshold of a distance between the current location of the terminal device and the cell reference location.

23. The method according to claim 22, wherein if the distance between the current location of the terminal device and the cell reference location is greater than or equal to the third threshold, the second measurement criterion is met.

24. The method according to any one of claims 16 to 23, wherein
if the first measurement criterion is not configured for the terminal device, and the terminal device meets the second measurement criterion, the measurement criterion based on the location of the terminal device is met; or
if a first timer associated with the first measurement criterion is in a running state, and the terminal device meets the second measurement criterion, the measurement criterion based on the location of the terminal device is met.

25. The method according to claim 24, wherein if the measurement criterion based on the location of the terminal device is met, the neighboring cell measurement is enabled.

26. The method according to any one of claims 15 to 24, wherein the one or more measurement criteria further comprise a measurement criterion based on cell signal quality.

27. The method according to claim 26, wherein if at least one of the measurement criterion based on the location of the terminal device or the measurement criterion based on cell signal quality is met, the neighboring cell measurement is enabled.

28. The method according to any one of claims 17 to 23, wherein the cell reference location comprises one or more of following:
a central location of a serving cell of the terminal device; or
a location of a satellite corresponding to a serving cell of the terminal device.

29. A terminal device, comprising:
a determining unit, configured to determine, based on one or more measurement criteria, whether to execute neighboring cell measurement, wherein the one or more measurement criteria comprise a measurement criterion based on a location of the terminal device.

30. The terminal device according to claim 29, wherein the measurement criterion based on the location of the terminal device comprises one or more of following:
a first measurement criterion, used to evaluate a mobility status of the terminal device; or
a second measurement criterion, used to instruct to enable a threshold condition of intra-frequency measurement and/or inter-frequency measurement.

31. The terminal device according to claim 30, wherein the mobility status is evaluated by using the first measurement criterion based on one or more of following:
a first threshold, comprising a threshold of a location change amount of the terminal device and/or a threshold of a distance change amount of the terminal device relative to a cell reference location;
a second threshold, used to indicate evaluation duration of the mobility status;
a radio resource control RRC status of the terminal device;
a current location of the terminal device;
a reference location of the terminal device; or
a first timer, wherein timing duration of the first timer is determined based on evaluation duration of the mobility status.

32. The terminal device according to claim 31, wherein if a first condition is met, the reference location of the terminal device is determined as or updated to the current location of the terminal device,
wherein the first condition is determined based on one or more of following:
whether the terminal device enters an RRC connected state from an RRC non-connected state;
whether the first measurement criterion is configured for the terminal device; or
a relationship between a difference between the current location of the terminal device and the reference location of the terminal device and the first threshold.

33. The terminal device according to claim 32, wherein the first condition comprises one or more of following:
if the terminal device enters the RRC connected state from the RRC non-connected state, and the first measurement criterion is configured for the terminal device, the current location of the terminal device is an initial value of the reference location of the terminal device; or
if the first measurement criterion is configured for the terminal device, and the difference between the current location of the terminal device and the reference location of the terminal device is greater than the first threshold, the current location of the terminal device is an updated value of the reference location of the terminal device.

34. The terminal device according to claim 31 or 32, wherein if a second condition is met, the first timer is started or restarted,
wherein the second condition is determined based on one or more of following:
whether the terminal device enters an RRC connected state from an RRC non-connected state;
whether the first measurement criterion is configured for the terminal device;
whether the terminal device in the RRC non-connected state meets a neighboring cell measurement relaxation criterion; or
a relationship between a difference between the current location of the terminal device and the reference location of the terminal device and the first threshold.

35. The terminal device according to claim 34, wherein the second condition comprises one or more of following:
if the terminal device enters the RRC connected state from the RRC non-connected state, the first measurement criterion is configured for the terminal device, and the terminal device in the RRC non-connected state does not meet the neighboring cell measurement relaxation criterion, starting the first timer; or
if the first measurement criterion is configured for the terminal device, and the difference between the current location of the terminal device and the reference location of the terminal device is greater than the first threshold, starting or restarting the first timer.

36. The terminal device according to any one of claims 30 to 35, wherein whether the second measurement criterion is met is determined based on one or more of following:
a current location of the terminal device;
a cell reference location; or
a third threshold, wherein the third threshold is a threshold of a distance between the current location of the terminal device and the cell reference location.

37. The terminal device according to claim 36, wherein if the distance between the current location of the terminal device and the cell reference location is greater than or equal to the third threshold, the second measurement criterion is met.

38. The terminal device according to any one of claims 30 to 37, wherein
if the first measurement criterion is not configured for the terminal device, and the terminal device meets the second measurement criterion, the measurement criterion based on the location of the terminal device is met; or
if a first timer associated with the first measurement criterion is in a running state, and the terminal device meets the second measurement criterion, the measurement criterion based on the location of the terminal device is met.

39. The terminal device according to claim 38, wherein if the measurement criterion based on the location of the terminal device is met, the neighboring cell measurement is enabled.

40. The terminal device according to any one of claims 29 to 38, wherein the one or more measurement criteria further comprise a measurement criterion based on cell signal quality.

41. The terminal device according to claim 40, wherein if at least one of the measurement criterion based on the location of the terminal device or the measurement criterion based on cell signal quality is met, the neighboring cell measurement is enabled.

42. The terminal device according to any one of claims 31 to 37, wherein the cell reference location comprises one or more of following:
a central location of a serving cell of the terminal device; or
a location of a satellite corresponding to a serving cell of the terminal device.

43. A network device, comprising:
a configuring unit, configured to configure one or more measurement criteria, wherein the one or more measurement criteria are used to determine whether to execute neighboring cell measurement, and the one or more measurement criteria comprise a measurement criterion based on a location of a terminal device.

44. The network device according to claim 43, wherein the measurement criterion based on the location of the terminal device comprises one or more of following:
a first measurement criterion, used to evaluate a mobility status of the terminal device; or
a second measurement criterion, used to instruct to enable a threshold condition of intra-frequency measurement and/or inter-frequency measurement.

45. The network device according to claim 44, wherein the mobility status is evaluated by using the first measurement criterion based on one or more of following:
a first threshold, comprising a threshold of a location change amount of the terminal device and/or a threshold of a distance change amount of the terminal device relative to a cell reference location;
a second threshold, used to indicate evaluation duration of the mobility status;
a radio resource control RRC status of the terminal device;
a current location of the terminal device;
a reference location of the terminal device; or
a first timer, wherein timing duration of the first timer is determined based on evaluation duration of the mobility status.

46. The network device according to claim 45, wherein if a first condition is met, the reference location of the terminal device is determined as or updated to the current location of the terminal device,
wherein the first condition is determined based on one or more of following:
whether the terminal device enters an RRC connected state from an RRC non-connected state;
whether the first measurement criterion is configured for the terminal device; or
a relationship between a difference between the current location of the terminal device and the reference location of the terminal device and the first threshold.

47. The network device according to claim 46, wherein the first condition comprises one or more of following:
if the terminal device enters the RRC connected state from the RRC non-connected state, and the first measurement criterion is configured for the terminal device, the current location of the terminal device is an initial value of the reference location of the terminal device; or
if the first measurement criterion is configured for the terminal device, and the difference between the current location of the terminal device and the reference location of the terminal device is greater than the first threshold, the current location of the terminal device is an updated value of the reference location of the terminal device.

48. The network device according to claim 45 or 46, wherein if a second condition is met, the first timer is started or restarted,
wherein the second condition is determined based on one or more of following:
whether the terminal device enters an RRC connected state from an RRC non-connected state;
whether the first measurement criterion is configured for the terminal device;
whether the terminal device in the RRC non-connected state meets a neighboring cell measurement relaxation criterion; or
a relationship between a difference between the current location of the terminal device and the reference location of the terminal device and the first threshold.

49. The network device according to claim 48, wherein the second condition comprises one or more of following:
if the terminal device enters the RRC connected state from the RRC non-connected state, the first measurement criterion is configured for the terminal device, and the terminal device in the RRC non-connected state does not meet the neighboring cell measurement relaxation criterion, starting the first timer; or
if the first measurement criterion is configured for the terminal device, and the difference between the current location of the terminal device and the reference location of the terminal device is greater than the first threshold, starting or restarting the first timer.

50. The network device according to any one of claims 44 to 49, wherein whether the second measurement criterion is met is determined based on one or more of following:
a current location of the terminal device;
a cell reference location; or
a third threshold, wherein the third threshold is a threshold of a distance between the current location of the terminal device and the cell reference location.

51. The network device according to claim 50, wherein if the distance between the current location of the terminal device and the cell reference location is greater than or equal to the third threshold, the second measurement criterion is met.

52. The network device according to any one of claims 44 to 51, wherein
if the first measurement criterion is not configured for the terminal device, and the terminal device meets the second measurement criterion, the measurement criterion based on the location of the terminal device is met; or
if a first timer associated with the first measurement criterion is in a running state, and the terminal device meets the second measurement criterion, the measurement criterion based on the location of the terminal device is met.

53. The network device according to claim 52, wherein if the measurement criterion based on the location of the terminal device is met, the neighboring cell measurement is enabled.

54. The network device according to any one of claims 43 to 52, wherein the one or more measurement criteria further comprise a measurement criterion based on cell signal quality.

55. The network device according to claim 54, wherein if at least one of the measurement criterion based on the location of the terminal device or the measurement criterion based on cell signal quality is met, the neighboring cell measurement is enabled.

56. The network device according to any one of claims 45 to 51, wherein the cell reference location comprises one or more of following:
a central location of a serving cell of the terminal device; or
a location of a satellite corresponding to a serving cell of the terminal device.

57. A terminal device, comprising a memory and a processor, wherein the memory is configured to store a program, and the processor is configured to invoke the program in the memory, to cause the terminal device to execute the method according to any one of claims 1 to 14.

58. A network device, comprising a memory and a processor, wherein the memory is configured to store a program, and the processor is configured to invoke the program in the memory, to cause the network device to execute the method according to any one of claims 15 to 28.

59. An apparatus, comprising a processor, configured to invoke a program from a memory, to cause the apparatus to execute the method according to any one of claims 1 to 14.

60. An apparatus, comprising a processor, configured to invoke a program from a memory, to cause the apparatus to execute the method according to any one of claims 15 to 28.

61. A chip, comprising a processor, configured to invoke a program from a memory, to cause a device on which the chip is installed to execute the method according to any one of claims 1 to 14.

62. A chip, comprising a processor, configured to invoke a program from a memory, to cause a device on which the chip is installed to execute the method according to any one of claims 15 to 28.

63. A computer-readable storage medium, wherein the computer-readable storage medium stores a program, and the program causes a computer to execute the method according to any one of claims 1 to 14.

64. A computer-readable storage medium, wherein the computer-readable storage medium stores a program, and the program causes a computer to execute the method according to any one of claims 15 to 28.

65. A computer program, wherein the computer program causes a computer to execute the method according to any one of claims 1 to 14.

66. A computer program, wherein the computer program causes a computer to execute the method according to any one of claims 15 to 28.
